# EUROPÄISCHE PATENTSCHRIFT

(11) **EP 1 883 906 B1**
(45) Veröffentlichungstag und Bekanntmachung des Hinweises auf die Patenterteilung: **23.11.2016**
(21) Anmeldenummer: 06753576.5
(22) Anmeldetag: 11.05.2006
(51) Int. Cl.: G06Q 20/34, G07F 7/08, G07F 7/10

(54) **TRAGBARER DATENTRÄGER MIT SICHERER DATENVERARBEITUNG**
PORTABLE DATA CARRIER FEATURING SECURE DATA PROCESSING
SUPPORT DE DONNEES PORTABLE A TRAITEMENT FIABLE DE DONNEES

(30) Priorität: 12.05.2005 DE 102005022019
(43) Veröffentlichungstag der Anmeldung: 06.02.2008
(73) Patentinhaber: Giesecke & Devrient GmbH, 81677 München (DE)
(72) Erfinder: BALDISCHWEILER, Michael, 81825 München (DE)
(86) Internationale Anmeldenummer: PCT/EP2006/004457
(87) Internationale Veröffentlichungsnummer: WO 2006/120001

(56) Entgegenhaltungen:
- US-A1- 2002 013 940
- US-A1- 2002 114 461
- US-A1- 2003 056 099
- US-B1- 6 715 078

## Beschreibung

Die Erfindung betrifft ein Verfahren zum sicheren Verarbeiten von Daten in einem tragbaren Datenträger, insbesondere in einer Chipkarte, und einen derartigen Datenträger.

Zum Verarbeiten von Daten von einem mit einem Prozessor ausgestatteten tragbaren Datenträger, die diesem von einer externen Einrichtung zur Verfügung gestellt werden, besitzt der Datenträger Schreibfunktionen, die die Daten in einen bestimmten Speicherbereich eines nichtflüchtigen Speichers des Datenträgers schreiben, beispielsweise in einen EEPROM-Speicher einer Chipkarte. Dies gilt zum beispielsweise für Chipkarten und SmartCards, die für Transaktionen an einem Terminal eines Point-of-Sale oder eines Kreditinstituts verwendet werden. Üblicherweise werden solche Daten anhand einer Speicheradresse bitweise in eine Zieldatei des Datenträgers geschrieben werden. Derartige nach ISO-IIC 7816-4 standardisierte Schreibkommandos für Chipkarten sind beispielsweise UPDATE-BINARY und WRITE-BINARY.

Zumeist sind die dem Datenträger zur Verfügung gestellten Daten nicht mehr als 256 Byte lang. Falls der Vorgang des Übertragens der Daten auf den Datenträger unterbrochen wird, beispielsweise durch eine Unterbrechung der Stromversorgung, muss ein 256 Byte großer Speicherbereich gelöscht werden, um Dateninkonsistenzen zu vermeiden und die Integrität des Datenträgers sicherzustellen. Dies gilt insbesondere bei Chipkarten deshalb, weil Daten durch Aufbringen von Ladungen auf Kondensatoren gespeichert werden und das Einschreiben von Datenbits in den EEPROM-Speicher bei bestimmten Schreibkommandos von den zu überschreibenden Bits bzw. den aktuellen Energieniveaus der Kondensatoren abhängig sein kann. Da die meisten nichtflüchtigen (EEPROM) Speicher in Seiten zu 64 Byte organisiert sind, ergibt sich für das Datenlöschen ein typischer Zeitbedarf von 3 ms x 256/64 = 12 ms. Dieser Zeitbedarf ist auch bei kontaktlos betriebenen Chipkarten noch vertretbar. Beim Speichern von größeren Datensätzen kann die Zeit für das Löschen des entsprechenden Speicherbereichs jedoch inakzeptabel lang werden. So wird bei einem Datensatz von 8 KByte bereits eine Löschzeit von 8192/64 x 3 ms = 384 ms benötigt.

Die EP 0 811 204 B1 beschreibt ein Verfahren zum Speichern von Daten in einer Chipkarte, bei dem vor einer Verarbeitung der Daten durch die Chipkarte eine Zugriffsberechtigung überprüft wird und die Daten vor der Überprüfung der Zugriffsberechtigung in einem dafür vorgesehenen Speicherbereich zwischengespeichert werden.

Im Rahmen der bestimmungsgemäßen Verarbeitung empfangener Daten führen Chipkarten regelmäßig Ver- oder Entschlüsselungen aus. Beispielsweise werden in US 6,715,078 B1 für eine Schlüsselableitung empfangene Daten verschlüsselt und nach erfolgreicher Speicherung des abgeleiteten Schlüssels wieder gelöscht werden. US 2003/0056099 A1 betrifft ein System, welches zur Ausgabe von Chipkarten verwendet wird. Das Ausgabesystem verschlüsselt den privaten asymmetrischen Kartenschlüssel mit einem geheimen symmetrischen Schlüssel und gibt den verschlüsselten Schlüssel zusammen mit einem zugehörigen Zertifikat an ein Terminal, welches diese Daten an die Karte überträgt. Die Karte entschlüsselt die empfangenen Daten und speichert seinen entschlüsselten, privaten, asymmetrischen Kartenschlüssel ab. Gemäß US 2002/0114461 A1 werden Dateninhalte vor Missbrauch durch individuelle Verschlüsselung geschützt. Mit einem Systemschlüssel verschlüsselte Daten werden entschlüsselt und mit einem individuellen Schlüssel wieder verschlüsselt. Der nicht mehr benötigte Systemschlüssel kann nach dieser Umverschlüsselung gelöscht werden.

EP 0 914 640 B1 offenbart zwei unabhängige Abläufe für die Speicherung und die spätere Verwendung sicherheitskritischer Information in einem Datenträger. In einem ersten Ablauf werden zu speichernde, empfangene Daten mit einem Schlüssel verschlüsselt und dauerhaft, nicht-flüchtig in einem Zielspeicherbereich des Datenträgers gespeichert. Später können in einem zweiten Ablauf die zu verwendenden, gespeicherten Daten jederzeit wieder entschlüsselt und anschließend verwendet werden.

Keine der vorgenannten Schriften bietet jedoch eine Lösung für das Problem zu langer Löschzeiten bei einer Unterbrechung eines Schreibprozesses an.

Der Erfindung liegt daher die Aufgabe zugrunde, ein Verfahren zum sicheren Verarbeiten von Daten und einen dementsprechenden Datenträger vorzuschlagen.

Diese Aufgabe wird erfindungsgemäß durch ein Verfahren und einen Datenträger mit den Merkmalen der unabhängigen Ansprüche gelöst. In davon abhängigen Ansprüchen sind vorteilhafte Ausgestaltungen und Weiterbildungen der Erfindung angegeben.

Ein Datenträger gemäß der vorliegenden Erfindung umfasst zumindest einen Prozessor und einen nichtflüchtigen Speicher - üblicherweise einen wiederbeschreibbaren EEPROM-Speicher - sowie eine von dem Prozessor ausführbare, speziell ausgebildete Verarbeitungssteuerung. Diese Verarbeitungssteuerung fordert die von dem Datenträger zu verarbeitenden Daten an und führt sie der Verarbeitung zu.

Die Verarbeitungssteuerung führt die von einer externen Vorrichtung zur Verfügung gestellten Daten jedoch nicht direkt einer Verarbeitung zu, beispielsweise einer Passwort- oder PIN-Überprüfung, einer Signierung oder Speicherung in einem Zielspeicherbereich, sondern legt sie zunächst in einem ersten Schritt in einem im nichtflüchtigen Speicher ausgebildeten Zwischenspeicherbereich ab, um erst im zweiten Schritt ihre Verarbeitung zu bewirken. Die Daten werden dabei im ersten Schritt verschlüsselt und nur in verschlüsselter Form in dem Zwischenspeicherbereich zwischengespeichert, wobei die Verschlüsselung durch eine Kryptographiefunktionalität des Datenträgers durchgeführt wird. Zum Verarbeiten der Daten werden die nunmehr verschlüsselten Daten durch die Kryptographiefunktionalität mittels eines kryptographischen Schlüssels zunächst entschlüsselt und im Anschluss daran in entschlüsselter Form verarbeitet.

Nachdem die Verarbeitung vollständig beendet ist, liegen die Daten zwar noch im Zwischenspeicher vor, jedoch verschlüsselt, so dass sie ohne Entschlüsselungsschlüssel nicht lesbar sind. Sie müssen daher nicht gelöscht werden. Statt dessen können sie zu einem beliebigen Zeitpunkt gelöscht werden, zum Beispiel dann, wenn dem Datenträger neue Daten zur Verarbeitung zu Verfügung gestellt werden. Vorzugsweise wird der Entschlüsselungsschlüssel im Schlüsselspeicherbereich unmittelbar nach Beendigung der Datenverarbeitung gelöscht. Dann besteht keinerlei Möglichkeit mehr, auf die verschlüsselten Daten des Zwischenspeicherbereichs zuzugreifen. Durch das Zwischenspeichern verschlüsselter Daten wird ein (z. B. aufgrund einer Unterbrechung eines Datenspeicherprozesses) erforderliches Löschen der zwischengespeicherten Daten unnötig oder zumindest auf das Löschen des zugehörigen Entschlüsselungsschlüssels reduziert. Da die Entschlüsselungsschlüssel in der Regel eine konstante und in der Regel wesentlich kürzere Bitlänge als die Daten haben, kann das Löschen bzw. Unbrauchbarmachen der zwischengespeicherten Daten durch Löschen des Entschlüsselungsschlüssels schnell und wirksam durchgeführt werden.

Die Schritte des Zwischenspeicherns und des Entschlüsselns zur unmittelbaren weiteren Verarbeitung werden vorzugsweise unmittelbar nacheinander ausgeführt, so dass beide Schritte eine funktionelle Einheit bilden und das Zwischenspeichern für einen Benutzer des Datenträgers transparent nicht ersichtlich ist. Dadurch wird erreicht, dass die Daten nur solange lesbar im Zwischenspeicher verbleiben, wie es zur Sicherung der Datenintegrität bei einer Unterbrechung notwendig ist, denn nach der Verarbeitung können die verschlüsselten Daten durch Löschen des Entschlüsselungsschlüssel unlesbar gemacht werden, da sie dann nicht mehr gebraucht werden. Der Zwischenspeicherbereich ist insofern vorzugsweise als ein ausgewählter, temporärer Speicherbereich ausgebildet, und nicht für ein Ablegen von Daten in zugreifbarer oder adressierbarer Form. Auf den Zwischenspeicherbereich kann vorzugsweise außer der Verarbeitungssteuerung keine Applikation und kein Benutzer zugreifen.

Prinzipiell kann das Verfahren auf jedem mit Rechenkapazität ausgestatteten Datenträger durchgeführt werden, erfindungsgemäß jedoch auf portablen Datenträgern mit Prozessor, wie z.B. Chipkarten, SmartCards, PCMCIA-Karten, sichere Multimediakarten, USB-Tokens und dergleichen mehr, insbesondere im Zusammenhang mit der Datenübertragung zwischen einem solchen Datenträger und einem externen Gerät, wie z.B. einem Chipkarten-Terminal, einem Point-Of-Sale, einem sonstigen Lesegrät, etc. Dabei ist ein die Funktionsweise des Datenträgers steuerndes Betriebssystem in einem permanenten ROM-Speicher abgelegt, das vorzugsweise auch die Verarbeitungssteuerung sowie die Kryptographiefunktion umfasst.

Zum Ver- und Entschlüsseln ist es möglich, sowohl ein symmetrisches Verfahren als auch ein asymmetrisches Verfahren zu verwenden. Bei einem symmetrischen Verfahren ist der Schlüssel zum Verschlüsseln der Daten beim Zwischenspeichern der gleiche, wie der Schlüssel zum Entschlüsseln der Daten beim Kopieren. Bei einem asymmetrischen Verfahren sind diese Schlüssel verschieden, wobei dann nach dem Verarbeiten der Daten lediglich der Entschlüsselungsschlüssel gelöscht werden muss, um weitere Zugriffe auf die im Zwischenspeicher befindlichen Daten zu verhindern.

Während des zweistufigen Verarbeitungsprozesses kann eine unerwünschte Unterbrechung einerseits während des initialen Zwischenspeicherns und andererseits während des abschließenden Verarbeitens auftreten. Bei einer Unterbrechung während des Zwischenspeicherns einer angeforderten Datenmenge, also zu einem Zeitpunkt, zu dem die verschlüsselten Daten noch unvollständig in dem Zwischenspeicherbereich vorliegen, wird der Entschlüsselungsschlüssel gelöscht, um ein Zugreifen auf die unvollständigen und inkonsistenten Daten des Zwischenspeicherbereichs unmöglich zu machen.

Hierbei kann der Entschlüsselungsschlüssel einerseits in einem im nichtflüchtigen Speicher des Datenträgers ausgebildeten Schlüsselspeicherbereich abgelegt sein, z.B. im EEPROM-Speicher einer Chipkarte, oder andererseits in einem flüchtigen Speicherbereich, z.B. im RAM-Speicher einer Chipkarte. Im ersteren Fall wird der Entschlüsselungsschlüssel bei einer Unterbrechung während des Zwischenspeicherns vorzugsweise mittels eines aktiven, von der Verarbeitungssteuerung angestoßenen Löschvorgangs gelöscht. Dieser aktive Löschvorgang kann dann einerseits quasi gleichzeitig mit dem Auftreten der Unterbrechung durchgeführt werden oder andererseits unmittelbar nach Aufheben der Unterbrechung als im wesentlichen erste Operation des Datenträgers nach der Unterbrechung. Dagegen muss der Entschlüsselungsschlüssel im letzteren Fall, also bei seinem Vorliegen in einem flüchtigen RAM-Speicher, nicht notwendigerweise aktiv von der Verarbeitungssteuerung gelöscht werden, sondern er wird als direkte Folge der Stromunterbrechung, ohne einen von der Verarbeitungssteuerung angestoßenen aktiven Löschvorgang gelöscht.

Bei einer Unterbrechung des Verarbeitens der Daten wird das Verarbeiten nach Aufheben der Unterbrechung prinzipiell zu Ende geführt und der Entschlüsselungsschlüssel erst gelöscht, wenn die Daten vollständig verarbeitet sind. Eine Dateninkonsistenz kann hierbei nicht auftreten, da die Daten in dem Zwischenspeicherbereich bereits vollständig vorliegen und eine unterbrochene Verarbeitung bei einem Wiederherstellen der Stromversorgung fortgesetzt oder neu begonnen werden kann.

In der Regel ist auf einem Datenträger ein Dateisystem eingerichtet, um die gespeicherten Daten zu strukturieren und logisch adressierbar zu machen. Deshalb kann der nichtflüchtige Speicher eines Datenträgers prinzipiell unterteilt werden in einen für ein Dateisystem vorgesehenen Speicherbereich und den restlichen, nicht als Dateisystem organisierten Speicherbereich. Der Zwischenspeicherbereich kann dann entweder innerhalb des Dateisystem-Speicherbereichs oder außerhalb dieses Speicherbereichs eingerichtet werden.

Bei einer besonders bevorzugten Ausführungsform umfasst das Verarbeiten der Daten ein Speichern der Daten in einer von Benutzern oder Applikationen zugreifbaren Zieldatei des Datenträgers. Dabei werden die zunächst im Zwischenspeicher verschlüsselt vorliegenden Daten im anschließenden Verarbeitungsschritt in einen Zielspeicherbereich des nichtflüchtigen Speichers kopiert, der für die Zieldatei reserviert ist. Beim Kopieren der verschlüsselten Daten in den Zielspeicherbereich werden die verschlüsselten Daten durch die Kryptographiefunktionalität mittels des Entschlüsselungsschlüssels entschlüsselt, um sie anschließend in entschlüsselter Form in den Zielspeicherbereich zu schreiben. Nachdem die Daten vollständig und in entschlüsselter Form in dem Zielspeicherbereich in der dafür vorgesehenen Zieldatei vorliegen, wird der Entschlüsselungsschlüssel im Schlüsselspeicherbereich gelöscht.

Falls der Zwischenspeicherbereich bei dieser Ausführungsform innerhalb des Speicherbereichs des Dateisystems eingerichtet ist, ist es vorteilhaft, den Zwischenspeicherbereich als lokalen, dem jeweiligen Zielspeicherbereich bzw. der jeweiligen Datei zugeordneten Speicherbereich auszubilden. Bei dieser Lösung besitzt also zumindest jede Zieldatei des Datenträgers einen eigenen lokalen Zwischenspeicherbereich. Falls der Zwischenspeicherbereich jedoch außerhalb des Dateisystems eingerichtet ist, ist es zweckmäßig, diesen als globalen Speicherbereich einzurichten, der für alle Dateien bzw. Zielspeicherbereiche und jede beliebige anderweitige Verarbeitung gleichermaßen als Zwischenspeicherbereich zur Verfügung steht.

Die Verwaltung und Einrichtung des Zwischenspeicherbereichs unterliegt im allgemeinen der Kontrolle einer in der Regel im Betriebsystem des Datenträgers integrierten Speicherverwaltung, die abhängig von beispielsweise einer Segmentierungs- und Verwaltungsstrategie den Zwischenspeicherbereich organisiert. Auch können bei Verwendung lokaler Zwischenspeicherbereiche diese direkt als Teil des für eine Datei reservierten Speicherbereichs im nichtflüchtigen EEPROM-Speicher eingerichtet werden, oder als davon getrennte Speicherbereiche, die mit den entsprechenden Zielspeicherbereichen über logische Verknüpfungen assoziiert werden.

Der kryptographische Entschlüsselungsschlüssel wird besonders bevorzugt zu Beginn eines Schreibvorgangs für diesen jeweils individuell durch die Kryptographiefunktionalität des Datenträgers erzeugt und in einem nichtflüchtigen oder flüchtigen Speicher abgelegt, so dass er nur während dieses einen Verarbeitungsvorgangs existent ist und eine Zugriffsmöglichkeit auf den Zwischenspeicherbereich vorher und nachher nicht besteht.

Ebenso ist es auch möglich, eine Vielzahl von Schlüsseln im Voraus zu generieren und im nichtflüchtigen Speicher abzulegen, wobei jeder dieser Schlüssel bei genau einem Verarbeitungsvorgang verwendet und danach gelöscht wird. Bei asymmetrischer Verschlüsselung kann beispielsweise auch ein (Master-) Verschlüsselungsschlüssel verwendet werden, zu dem eine Vielzahl von individuellen Entschlüsselungsschlüsseln erzeugt werden können.

Neben der Anordnung des Schlüsselspeicherbereichs in einem flüchtigen Speicher, wie z.B. dem RAM-Speicher einer Chipkarte, gibt es ähnlich wie beim Zwischenspeicherbereich auch eine globale und eine lokale Variante einer Anordnung im nichtflüchtigen Speicher. Bei der globalen Variante wird ein zentraler Schlüsselspeicherbereich außerhalb des Dateisystem-Speicherbereichs des EEPROM-Speichers eingerichtet, auf den bei jedem Schreibvorgang zugegriffen wird. Falls ein globaler Zwischenspeicherbereich existiert, ist es zusätzlich möglich, den globalen Schlüsselspeicherbereich als Teil des globalen Zwischenspeicherbereichs auszubilden. Falls die Verarbeitung der Daten aus einem Kopieren in einen Zielspeicherbereich besteht, können lokale Schlüsselspeicherbereiche eingerichtet werden, die besonders vorteilhaft als Teilbereiche möglicher lokaler Zwischenspeicherbereiche mit den Zielspeicherbereichen bzw. Dateien assoziiert werden.

Die kryptographische Funktionalität kann als Softwarekomponente oder als Hardwarekomponente bereitgestellt werden. Dabei kann einer Softwarelösung vorteilhaft als Betriebssystemroutine ausgebildet sein, während sich bei einer Hardwarelösung ein kryptographischer Co-Prozessor anbietet, dessen Funktionen durch das Betriebssystem bzw. die Schreibfunktion beim Ver- oder Entschlüsseln von Daten in Anspruch genommen werden.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: eine erfindungsgemäße Chipkarte mit globalem Zwischenspeicher und einer Software-Kryptographiefunktionalität;
- Figur 2: ein Flussdiagramm einer bevorzugten Ausführungsform des erfindungsgemäßen Verfahrens; und
- Figur 3: eine erfindungsgemäße Chipkarte mit lokalen Zwischenspeichern und einer Hardware -Kryptographiefunktionalität.

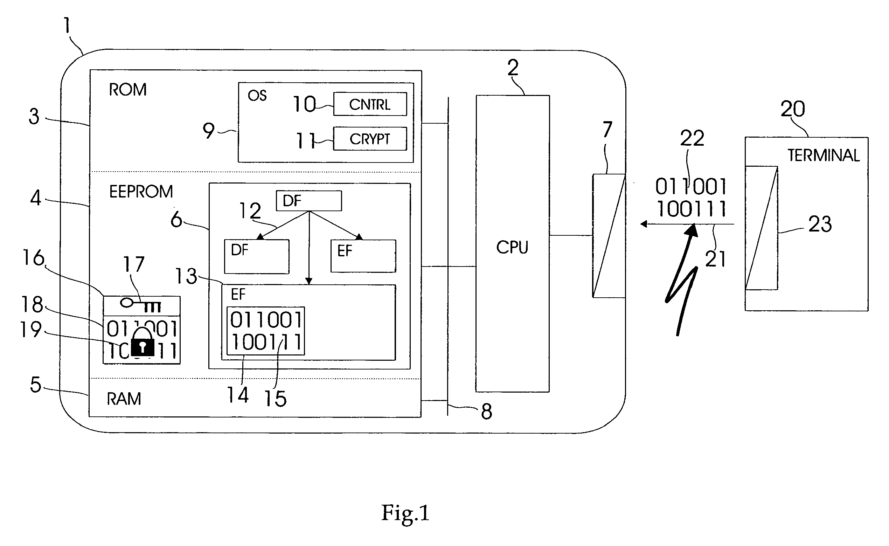

Eine herkömmliche Chipkarte umfasst als wesentliche Komponenten wie in Figur 1 illustriert einen Prozessor 2, eine Speicheranordnung 3, 4, 5 und eine Schnittstelle 7 zum Kontaktieren der Chipkarte 1 mit einem Lese- oder Bearbeitungsgerät 2 über eine korrespondierende Schnittstelle 23 und zum Ermöglichen eines Datentransfers 21. Die Kommunikationsverbindung innerhalb der Chipkarte 1 wird hergestellt durch ein Bussystem 8. Die Speicheranordnung 3, 4, 5 besteht in der Regel aus drei verschiedenartigen Speichern, einem permanenten ROM-Speicher 3, einem nichtflüchtigen und wiederbeschreibbaren Speicher 4, der üblicherweise ein EEPROM ist, aber auch ein anderer Speichertyp sein kann, z. B. ein Flash-Speicher, sowie einem flüchtigen RAM-Arbeitsspeicher 5, dessen Daten verloren gehen, sobald die Stromversorgung der Chipkarte 1 unterbrochen wird.

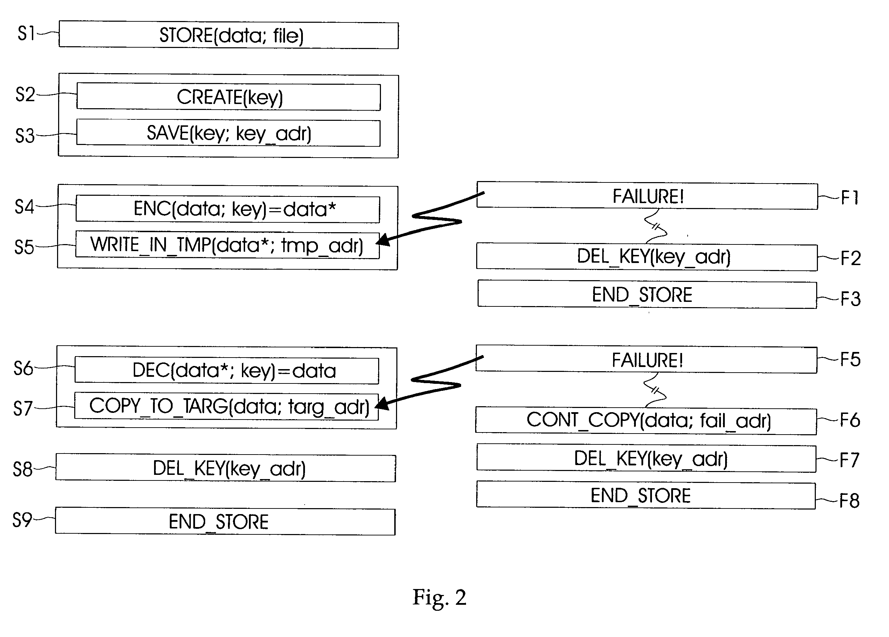

Das Betriebssystem 9 der Chipkarte 1 ist in dem permanenten ROM-Speicher 3 abgelegt, wo es über die gesamte Lebensdauer der Chipkarte 1 unverändert bleibt. Es umfasst eine Anzahl spezifischer Kommandos, die elementare Chipkartenfunktionen realisieren, z. B. Ein- und Ausgabe, Authentisierung, Speicherverwaltung, etc. Insbesondere umfasst das Betriebssystem 9 eine Verarbeitungssteuerung 10, die bei dieser Ausführungsform der Erfindung als Speicherfunktion ausgebildet ist und eingesetzt wird, um Daten 22 in Dateien 13 in dem EEPROM-Speicher 4 zu schreiben, die in Folge einer Datenkommunikation 23 der Chipkarte 1 mit einem Terminal 2 auf der Chipkarte 1 gespeichert werden sollen. Gemäß des Standards ISO/IEC 7816-4 repräsentieren beispielsweise die Kommandos WRITE-BINARY und UPDATE-BINARY derartige Schreib- bzw. Speicherfunktionen. Die Verarbeitungssteuerung 10 der Figur 1 ist erfindungsgemäß als Speicherfunktion ausgestaltet, deren Funktionsweise das Flussdiagramm der Figur 2 skizziert. Darüber hinaus umfasst das Betriebssystem 9 eine Kryptographiefunktionalität 11 zum Verschlüsseln und Entschlüsseln von Daten.

Grundsätzlich betrifft die Erfindung neben dem Speichern von Daten in Dateien, die einem Datenträger und insbesondere einer Chipkarte 1 zur Verfügung gestellt werden, jede mögliche Art der Verarbeitung von Daten, z.B. das Unterziehen der Daten einer sicherheitskritischen Überprüfung z.B. als PIN, Passwort oder Signatur, oder andere Verarbeitungen wie z.B. ein Signieren mittels der Daten, Entschlüsseln, arithmetische oder logische Verarbeitung und dergleichen mehr, bei der es unter Umständen nicht notwendig ist, die Daten in einer Datei 13 im EEPROM-Speicher 4 abzulegen, sondern sie im RAM-Speicher 5 verbleiben können. Alle diese Verarbeitungsmodi werden im Sinne der Erfindung als zweistufige Prozesse realisiert, bestehend aus einem verschlüsselten Zwischenspeichern der Daten und dem anschließenden eigentlichen Verarbeiten der entschlüsselten Daten. Im folgenden wird eine besonders bevorzugte Ausführungsform der Erfindung erläutert, bei der der Verarbeitungsschritt aus einem Kopieren der im Zwischenspeicher 18 verschlüsselt vorliegenden Daten 19 in eine Datei 13 im EEPROM-Speicher 4 der Chipkarte 1 besteht. Dies ist jedoch keinesfalls als Beschränkung der Erfindung auf das Speichern von Daten zu verstehen.

Ähnlich wie bei einem herkömmlichen Computer sind die Daten einer Chipkarte 1 üblicherweise in einem Dateisystem 12 organisiert, das aus Verzeichnissen (Dedicated File; DF-Datei) und datentragenden Dateien (Elementary File; EF-Datei) besteht, wobei DF-Dateien auf andere Dateien verweisen können, so dass sich eine Baumstruktur ergibt. Auf der Chipkarte 1 zu speichernde Daten 22 werden also in eine bestimmte EF-Datei 13 in den Verzeichnisbaum 12 einsortiert und insofern in den Speicherbereich 14 dieser EF-Daten 13 geschrieben. Der genaue Speicherbereich 14 des EEPROM-Speichers 4, der die zu speichernden Daten 22 aufnehmen soll, ergibt sich aus dem eigentlichen Schreibkommando dessen Übergabewerte von dem Betriebssystem 9 interpretiert werden und in physikalische Speicheradressen innerhalb des EEPROM-Speichers 4 umgesetzt werden. Der EEPROM-Speicher 4 umfasst also einen bestimmten Speicherbereich 6 für das Dateisystem 12 und die darin abgelegten Daten 15 und einen außerhalb dieses Speicherbereichs 6 liegenden Speicherbereich, in dem andere Daten abgelegt werden können.

Figur 2 zeigt in den Schritten S1 bis S9 den unterbrechungsfreien Ablauf eines Speicherprozesses gemäß der vorliegenden Erfindung. Die in Figur 2 angegebenen Kommandos repräsentieren keine realen Kommandos einer bestimmten Chipkarte oder eines bestimmten Betriebssystems, sondern sind als Pseudocode-Kommandos aufzufassen, die der reinen Illustration dienen.

In Schritt S1 wird ein Speicherkommando STORE aufgerufen, das die Ausführung der erfindungsgemäßen Verarbeitungssteuerung 10 bewirkt und dessen Übergabewerte - die zu speichernden Daten (data) und eine Zieldatei (file) - von dem Betriebsystem 9 interpretiert werden. Die Verarbeitungssteuerung 10 übernimmt also die Kontrolle über die zu speichernden Daten und fordert sie an. Das STORE-Kommando S1 kann auch als eine von einem externen Terminal 20 an die Chipkarte 1 herangetragene Datenübertragung 21 verstanden werden. Auch hierbei übernimmt die Verarbeitungssteuerung 10 die Kontrolle über die Daten 22 und fordert sie insofern an. Anstelle eines aus speicherorganisatorischer Sicht abstrakten Dateinamens ist es auch möglich, dass dem STORE-Kommando direkt eine Speicheradresse übergeben wird, die den Speicherbereich 14 im EEPROM-Speicher 4 der Chipkarte 1 adressiert, in dem die betreffenden Daten gespeichert werden sollen. Zusätzlich kann es der Fall sein, dass außer dieser Offset-Speicheradresse auch die Anzahl der zu schreibenden Bytes übergeben wird, also die Größe der zu speichernden Daten.

Im Schritt S2 wird durch die symmetrisch arbeitende Kryptographiefunktion 11 ein kryptographischer Schlüssel 17 (key) erzeugt, welcher in Schritt S3 in einem hierfür reservierten Schlüsselspeicherbereich 16 im EEPROM-Speicher 4 abgespeichert wird. Bei einer asymmetrischen Ver- und Entschlüsselung könnte ein Verschlüsselungsschlüssel nach dem Verschlüsseln in Schritt S3 sofort verworfen werden, während der zugehörige Entschlüsselungsschlüssel 17 im Schlüsselspeicherbereich 16 gespeichert wird. Zum Speichern des Schlüssels wird dem entsprechenden SAVE-Kommando hierfür der kryptographische Schlüssel 17 sowie eine Speicheradresse (key_adr) übergeben, die den für kryptographische Schlüssel 17 reservierten Speicherbereich 16 im EEPROM-Speicher 4 adressiert, der, wie in Figur 1 dargestellt, vorzugsweise außerhalb des Speicherbereichs 6 für das Dateisystem 12 als globaler Speicherbereich ausgebildet ist. Sämtliche im Rahmen des Datenspeichers erzeugten kryptographischen Schlüssel 17 werden dann in dem gleichen Schlüsselspeicherbereich 16 gespeichert. Dies ist möglich, da die Schlüssel 17 für jeden Speicherprozess individuell erzeugt und nach Beendigung des Speichervorgangs gelöscht werden.

Bei einem derartigen globalen Schlüsselspeicherbereich 16 ist es strenggenommen nicht nötig, den SA VE-Kommando in Schritt S3 eine Speicheradresse key_adr zu übergeben, da die konstante Speicheradresse des Schlüsselspeicherbereichs 16 dem Betriebssystem 9 ohnehin bekannt ist.

Die bitweise zu speichernden Daten 22 (data) werden anschließend in Schritt S4 mittels des Schlüssels 17 (key) verschlüsselt, so dass verschlüsselte Daten 19 (data*) entstehen. Die verschlüsselten Daten 19 werden in Schritt S5 in dem Zwischenspeicher 18 zwischengespeichert, wobei der Zwischenspeicher-Routine WRITE_IN_TMP die verschlüsselten Daten 19 und die Speicheradresse tmp_adr des Speicherbereichs 18 übergeben werden.

Die den STORE-Kommando in Schritt S1 übergebenen Daten 22 liegen physikalisch zunächst im flüchtigen RAM-Arbeitsspeicher 5 und werden von dort von der Verschlüsselungsroutine 11 in Schritt S4 ausgelesen. Die verschlüsselten Daten können dann entweder zur Verwendung durch WRITE_IN_TMP wieder im RAM-Speicher 4 abgelegt werden, oder sie werden direkt mit ihrer Erzeugung (möglicherweise als Datenstrom) ohne vollständiges Ablegen im RAM-Speicher (sondern möglicherweise nur in spezialisierten Registern oder Spezialspeichern eines kryptographischen Co-Prozessors) in den Zwischenspeicherbereich 18 geschrieben. Im letztgenannten Fall werden die Schritte S4 und S5 bzw. die Kommandos ENC und WRITE_IN_TMP in vorteilhafter Weise zusammenwirkend durchgeführt.

Falls es sich wie in der Ausführungsform der Figur 1 bei dem Speicherbereich 18 um einen globalen Speicherbereich handelt, ist ein Übergeben der Speicheradresse tmp_adr nicht notwendig, da das Betriebssystem den globalen Zwischenspeicherbereich 18 kennt. Die Ausführungsform der Figur 1 zeigt weiterhin, dass der Schlüsselspeicherbereich 16 direkt in den Zwischenspeicherbereich 18 integriert bzw. an ihn anschließend ausgebildet sein kann. Dies ist insofern sinnvoll, da der Schlüssel 17 und die verschlüsselten Daten 19 immer ein funktionales Paar bilden.

Nach Beendigung des Schrittes S5 liegen die zu speichernden Daten 22 in verschlüsselter Form 19 auf der Chipkarte 1 und auf sie kann nur von erfindungsgemäß ausgebildeten Kommandos unter Verwendung des kryptographischen Schlüssels 17 zugegriffen werden. Demzufolge werden die Daten in Schritt S8 zur Vorbereitung des Kopierens in den Zielspeicherbereich 14 mittels des kryptographischen Schlüssel 17 entschlüsselt. In Schritt S7 werden die nunmehr im Klartext vorliegenden Daten 15 in den endgültigen Zielspeicherbereich 14 geschrieben, der der Datei 13 im Speicherbereich 6 des EEPROM-Speichers 4 zur Verfügung steht. Analog zu dem oben erläuterten Zusammenwirken der Zwischenspeicherschritten S4 und S5 können die Schritte S6 und S7 bzw. die Kommandos DEC und COPY_TO_TARG in vorteilhafter Weise zusammenwirkend ausgeführt werden, indem die Daten ohne Ablegen im RAM-Speicher 4 direkt mit der Entschlüsselung in den Zielspeichebereich 14 geschrieben werden.

Zum Durchführen des Kopierschritts S7 ist es unter Umständen notwendig, die Speicheradresse targ_adr des Zielspeicherbereichs 14 anhand des Dateinamens "file" mittels des Betriebsystems 9 zu ermitteln. Mit Beendigung des Schrittes S7 existieren die zu speichernden Daten im EEPROM-Speicher 4 also zweimal, einmal in verschlüsselter Form 19 im Zwischenspeicherbereich 18 und einmal in entschlüsselter Form 15 im Zielspeicherbereich 14. Aufgrund der Verschlüsselung der Daten 19 ist es jedoch nicht notwendig, die verschlüsselten Daten 19 aktiv zu löschen, es reicht, den Schlüssel 17 in Schritt S8 zu löschen. Dadurch wird der Zugriff auf die Daten 19 des Zwischenspeichers 18 unmöglich gemacht und die Datenkonsistenz bleibt gewährleistet. Der Speicherprozess wird in Schritt S9 ordnungsgemäß beendet.

Mit dem vollständigen Zwischenspeichern, also mit Beendigung des Schrittes S5, liegen die zu speichernden Daten 22 erstmals physikalisch im EEPROM-Speicher 4 der Chipkarte 1 vollständig vor. Dieser Zeitpunkt markiert insofern eine Entscheidungsgrenze bei der Fehlerbehandlung einer Unterbrechung der Stromversorgung oder einer sonstigen Störung, da bei einer Störung vor Beendigung des Zwischenspeicherschrittes S5, illustriert durch den Schritt F1 in Figur 2, die zu speichernden Daten 22 nur unvollständig und verschlüsselt im Zwischenspeicherbereich 19 der Chipkarte 1 vorliegen, so dass der Speicherprozess nicht ordnungsgemäß beendet werden kann.

In diesem Fall kann nur die Konsistenz der Daten sichergestellt bzw. wiederhergestellt werden, indem die bereits zwischengespeicherten unvollständigen Daten gelöscht werden. Zu diesem Zweck wird in Schritt F2 der kryptographische Schlüssel 17 gelöscht, so dass der vor der Unterbrechung F1 verschlüsselt abgespeicherte Teildatensatz nicht mehr verwendet werden kann. Die Datenspeicherung wird in Schritt F4 zwar erfolglos, jedoch ohne Schaden für die Datenkonsistenz beendet und die Datenspeicherung kann durch den Benutzer gegebenenfalls wiederholt werden.

Der Schritt F2 des Löschens des Schlüssels 17 kann abhängig von dem Speicherort des Schlüssels 17 unterschiedlich bewerkstelligt werden. Falls der Schlüssel 17 wie in Figur 1 gezeigt im nichtflüchtigen Speicher 4 liegt, wird er bei einer Unterbrechung F1 des Zwischenspeicherns von der Verarbeitungssteuerung 10 mittels eines explizit aktivierten Löschvorgangs gelöscht. Dies kann unmittelbar vor der Unterbrechung F1 oder unmittelbar nach dem Aufheben der Unterbrechung bzw. dem erneuten in Kontakt bringen der Chipkarte 1 mit dem Terminal 20 durchgeführt werden. Der erste Fall kann beispielsweise dadurch realisiert werden, dass nach dem Erkennen einer Unterbrechung durch die Chipkarte 1 eine etwaig vorhandene Restspannung in den Kondensatoren verwendet wird, um den kryptographischen Schlüssel quasi im Notbetrieb noch zu löschen. Die zweite Variante, also das Löschen des Schlüssels 17 unmittelbar nach Wiederinbetriebnahme der Chipkarte 1, kann dadurch realisiert werden, dass zu Beginn des Zwischenspeicherschrittes S5 ein logisches Flag gesetzt wird, das nur dann wieder entfernt wird, wenn der Schritt S5 erfolgreich abgeschlossen wird. Bei der Wiederinbetriebnahme nach einer Unterbrechung F1 zeigt das gesetzte Flag die Unterbrechung F1 an und das Betriebssystem 9 der Chipkarte 1 kann den Schritt F2 des Löschens des Schlüssels 17 unmittelbar durchführt.

Es ist jedoch auch möglich, den Schlüssel 17 im flüchtigen RAM-Speicher 5 abzulegen, da er lediglich temporär gebraucht wird. Bei einer Unterbrechung F1 des Zwischenspeicherns würde der Schlüssel 17 dann unmittelbar in Folge der Unterbrechung F1 gelöscht, da der flüchtige RAM-Speicher 4 seine Daten bei einer Stromunterbrechung verliert, ohne dass ein aktives Löschen nötig wäre.

Bei einer Unterbrechung F5 nach Beendigung des Schrittes S5, also beispielsweise während des Kopierens S7 der Daten 19 vom Zwischenspeicherbereich 18 in den Zielspeicherbereich 14 kann der unterbrochene Kopierschritt S7 im Schritt F6 fortgesetzt werden. Der Kopiervorgang wird dann genau an der Speicheradresse fail_adr wieder aufgenommen, bei der der Kopierprozess S7 abgebrochen wurde. Diese Speicheradresse kann von dem Betriebssystem 9 ermittelt werden, entweder durch Zwischenspeichern von Speicheradressen während des Schrittes S7 oder einer Analyse des Zielspeicherbereiches 14 nach einer Wiederinbetriebnahme der Chipkarte 1. Natürlich kann auch anstelle des Schrittes F6 nocheinmal der ursprünglich Kopierschritt S7 ohne Berücksichtigung der Fehleradresse wiederholt werden. Nach einer ordnungsgemäßen Beendigung des Schrittes F6 wird der Schlüssel 17 in Schritt F7 gelöscht und der Schreibprozess in Schritt F8 beendet.

In gleicher Weise können auch Unterbrechungen aller anderen Schritte S1 bis S4 bzw. S6, S8, S9 behandelt werden, abhängig davon, ob sie vor oder nach Beendigung des Schrittes S5 auftraten.

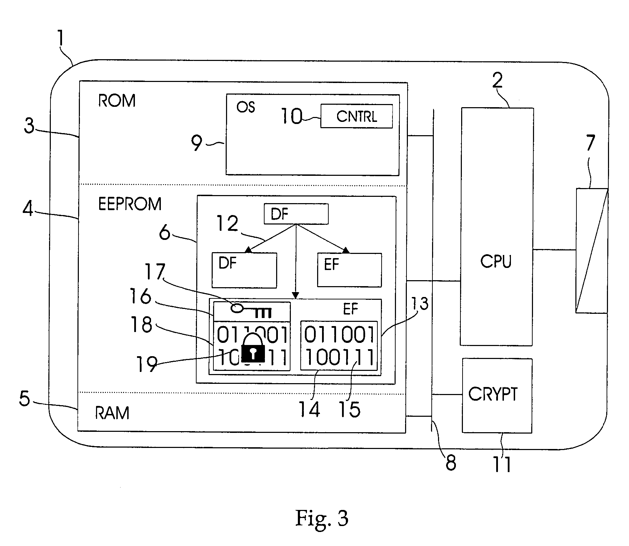

Als Verschlüsselungsverfahren bieten sich bei der vorliegenden Erfindung insbesondere symmetrische Kryptographieverfahren wie z. B. DES, AES oder deren Varianten, da sie für die vorliegende Erfindung den Vorteil besitzen, identische ver- und Entschlüsselungsschlüssel 17 zu verwenden. Prinzipiell ist es auch möglich, eine asymmetrische Verschlüsselung zu verwenden, bei der korrespondierende, verschiedene Schlüssel zur Ver- und Entschlüsselung verwendet werden. In diesem Fall kann beispielsweise ein unveränderlicher Masterschlüssel zum Verschlüsseln verwendet und aus dem Masterschlüssel abgeleitete individuelle Entschlüsselungsschlüssel im Schlüsselspeicher 16 zu Entschlüsseln abgelegt werden. Ebenso kann eine Vielzahl von Entschlüsselungsschlüsseln im voraus generiert werden, die dann nacheinander benutzt und nach dem Benutzen gelöscht werden. Die kryptographische Funktionalität kann einerseits, wie in Figur 1 durch eine Betriebssystemroutine 11 zur Verfügung gestellt werden, oder wie in Figur 3 als Hardwarelösung durch einen speziellen kryptographischen Chip 11, z. B. einen High-Speed Triple-DES Co-Prozessor.

Die Anordnung des Schlüsselspeicherbereichs 16 und des Zwischenspeicherbereichs 18 im Zusammenhang mit dem Zielspeicherbereich 14 kann auch abweichend von der in Figur 1 illustrierten Lösung realisiert werden. Hierzu zeigt Figur 3 eine Ausführungsform, bei der der Schlüsselspeicherbereiche 16 und Zwischenspeicherbereiche 18 lokal mit dem Zielspeicherbereich 14 einer EF-Datei 13 in den Speicherbereich 6 für das Dateisystem 12 verknüpft werden. Jedem Zielspeicherbereich 14 ist hierbei also ein individueller Zwischenspeicherbereich 18 und ein Schlüsselspeicherbereich 16 zugeordnet. Dies kann einerseits mit einem physikalisch oder logisch zusammenhängenden Speicherbereich bzw. Adressraum realisiert sein, oder die lokalwen Speicherbereiche 14,16 und 18 können durch logische Verknüpfungen einander zugeordnet sein.

Ebenfalls sinnvoll kann eine Anordnung sein, bei der zwar der Zwischenspeicherbereich im Speichebereich 14 der Datei 13 lokal angeordnet ist, der Schlüsselspeicherbereich 17 jedoch global außerhalb des Speicherbereichs 6. Genauso gut ist es möglich, den Schlüsselspeicherbereich lokal innerhalb des Speicherbereichs 14 der Datei 13 anzuordnen, während der Zwischenspeicherbereich 16 als globaler Bereich außerhalb des Speicherbereichs 6 des EEPROM-Speichers 4 ausgebildet ist.

## Patentansprüche

1. Verfahren zum sicheren Verarbeiten von Daten (22) in einem tragbaren Datenträger (1), wobei die folgenden Schritte in dem tragbaren Datenträger ausgeführt werden:
a) Anfordern von zu verarbeitenden Daten (22);
b) Verschlüsseln (S4) der zu verarbeitenden - von einem externen Gerät zur Verfügung gestellten - Daten (22);
c) Zwischenspeichern (S5) der verschlüsselten Daten (19) in einem nichtflüchtigen Zwischenspeicherbereich (18) des Datenträgers (1);
d) Entschlüsseln (S6) der zwischengespeicherten, verschlüsselten Daten (19) mittels eines in dem Datenträger gespeicherten Entschlüsselungsschlüssels (17); und
e) Verarbeiten (S7) der entschlüsselten, zu verarbeitenden Daten (22), wobei bei einer Unterbrechung (F1) während des Zwischenspeicherns nicht die bereits zwischengespeicherten Daten sondern der Entschlüsselungsschlüssel (17) gelöscht wird (F2).

2. Verfahren nach Anspruch 1, **dadurch gekennzeichnet, dass** das Entschlüsseln (S6) der verschlüsselten Daten (19) unmittelbar im Anschluss an das Zwischenspeichern (S5) der verschlüsselten Daten (19) erfolgt.

3. Verfahren nach Anspruch 1 oder 2, **dadurch gekennzeichnet, dass** der Entschlüsselungsschlüssel (17) nach ordnungsgemäßem Beenden des Verarbeitens gelöscht wird (S8).

4. Verfahren nach einem der Ansprüche 1 bis 3, **dadurch gekennzeichnet, dass** der Datenträger in einem unterbrechungsfreien Ablauf die Schritte a bis e hintereinander ausführt.

5. Verfahren nach einem der Ansprüche 1 bis 4, **dadurch gekennzeichnet, dass** der Entschlüsselungsschlüssel (17) bei der Unterbrechung (F1) des Zwischenspeicherns (S5) durch einen aktiven Löschvorgang gelöscht wird (F2).

6. Verfahren nach Anspruch 5, **dadurch gekennzeichnet, dass** das Löschen (F2) mit Auftreten der Unterbrechung (F1) des Zwischenspeicherns (S5) oder unmittelbar nach Aufheben der Unterbrechung (F1) des Zwischenspeicherns (S5) erfolgt.

7. Verfahren nach einem der Ansprüche 1 bis 4, **dadurch gekennzeichnet, dass** der Entschlüsselungsschlüssel (17) in einem flüchtigen Speicher (5) vorliegt und bei der Unterbrechung (F1) des Zwischenspeicherns (S5) als direkte Folge einer Unterbrechung (F1) der Stromversorgung gelöscht wird.

8. Verfahren nach einem der Ansprüche 1 bis 7, **dadurch gekennzeichnet, dass** bei einer Unterbrechung (F5) des Verarbeitens das Verarbeiten nach Aufheben der Unterbrechung (F5) des Verarbeitens fortgesetzt wird (F6) und der Entschlüsselungsschlüssel (17) erst nach Beenden des Verarbeitens der Daten (15) gelöscht wird.

9. Verfahren nach einem der Ansprüche 1 bis 8, **dadurch gekennzeichnet, dass** das Verarbeiten ein Kopieren (S7) der entschlüsselten Daten (15) in einen Zielspeicherbereich (14) umfasst.

10. Verfahren nach Anspruch 9, **dadurch gekennzeichnet, dass** sich der Zielspeicherbereich (14) innerhalb eines Speicherbereichs (6) eines Dateisystems (12) in einem nichtflüchtigen Speicher (4) des Datenträgers (1) befindet.

11. Verfahren Anspruch 10, **dadurch gekennzeichnet, dass** der Zwischenspeicherbereich (18) innerhalb des Speicherbereichs (6) eines Dateisystems (12) als dem Zielspeicherbereich (14) zugeordneter Speicherbereich lokal ausgebildet ist.

12. Verfahren nach Anspruch 10, **dadurch gekennzeichnet, dass** der Zwischenspeicherbereich (18) außerhalb des Speicherbereichs (6) eines Dateisystems (12) als reservierter Speicherbereich global ausgebildet ist.

13. Verfahren nach einem der Ansprüche 1 bis 12, **dadurch gekennzeichnet, dass** der Zwischenspeicherbereich (18) als temporärer Speicherbereich ausgebildet ist, auf dessen Daten nur die Verarbeitungssteuerung (10) zugreifen kann.

14. Verfahren nach einem der Ansprüche 1 bis 13, **dadurch gekennzeichnet, dass** beim Zwischenspeichern (S5) die Daten (22) mit einem auf dem Datenträger (1) gespeicherten kryptographischen Schlüssel (17) verschlüsselt werden (S4) und beim Verarbeiten die verschlüsselten Daten (19) mit dem kryptographischen Schlüssel oder einem davon verschiedenen Entschlüsselungsschlüssel entschlüsselt werden (S6).

15. Verfahren nach einem der Ansprüche 1 bis 14, **dadurch gekennzeichnet, dass** der Schlüssel (17) vor dem Zwischenspeichern (S5) der Daten (22) individuell erzeugt wird (S2).

16. Verfahren nach einem der Ansprüche 1 bis 15, **dadurch gekennzeichnet, dass** der Entschlüsselungsschlüssel (17) in einem Schlüsselspeicherbereich (16) des Zwischenspeicherbereichs (18) gespeichert wird (S3).

17. Verfahren nach einem der Ansprüche 1 bis 15, **dadurch gekennzeichnet, dass** der Entschlüsselungsschlüssel (17) in einem Schlüsselspeicherbereich (16) außerhalb des Zwischenspeicherbereichs (18) gespeichert wird (S3).

18. Verfahren nach einem der Ansprüche 1 bis 17, **dadurch gekennzeichnet, dass** der tragbare Datenträger (1) eine Chipkarte mit einem Prozessor (2) ist.

19. Verfahren nach einem der Ansprüche 1 bis 18, **dadurch gekennzeichnet, dass** das Ver- und Entschlüsseln (S4, S6) mittels eines von einem Prozessor (2) des Datenträgers (1) ausführbaren Softwaremoduls oder eines Hardwaremoduls des Datenträgers (1) durchgeführt wird.

20. Tragbarer Datenträger (1), umfassend einen Prozessor (2), einen nichtflüchtigen Speicher (4) sowie eine Verarbeitungssteuerung (10) und eine Kryptographiefunktion (11), die beide von dem Prozessor (2) ausführbar sind wobei
- die Verarbeitungssteuerung (10) eingerichtet ist, zu verarbeitende Daten (22) anzufordern, ein Zwischenspeichern (S5) der zu verarbeitenden Daten (22) in einem Zwischenspeicherbereich (18) des Datenträgers (1) in verschlüsselter Form (19) zu bewirken und eine Verarbeitung der zwischengespeicherten, verschlüsselten Daten (19) als entschlüsselte Daten (15) zu bewirken,
wobei die Verarbeitungssteuerung (10) so eingerichtet ist, dass bei einer Unterbrechung (F1) des Zwischenspeicherns nicht die bereits zwischengespeicherten Daten sondern der Entschlüsselungsschlüssel (17) gelöscht wird (F2); und
- die Kryptographiefunktion (11) eingerichtet ist, die im Zwischenspeicherbereich (18) zwischenzuspeichernden, von einem externen Gerät zur Verfügung gestellten, Daten (22) zu verschlüsseln und die zu verarbeitenden, verschlüsselten Daten (19) mit einem in dem Datenträger gespeicherten Entschlüsselungsschlüssel (17) zu entschlüsseln.

21. Datenträger (1) nach Anspruch 20, **dadurch gekennzeichnet, dass** die Verarbeitungssteuerung (10) eingerichtet ist, das Entschlüsseln (S6) der verschlüsselten Daten (19) unmittelbar im Anschluss an das Zwischenspeichern (S5) der verschlüsselten Daten (19) zu bewirken.

22. Datenträger (1) nach Anspruch 20 oder 21, **dadurch gekennzeichnet,** die Verarbeitungssteuerung (10) eingerichtet ist, bei der Unterbrechung (F1) des Zwischenspeicherns (S5) den Entschlüsselungsschlüssel (17) mittels eines aktiven Löschvorgangs zu löschen (F2).

23. Datenträger (1) nach Anspruch 22, **dadurch gekennzeichnet, dass** die Verarbeitungssteuerung (10) eingerichtet ist, den Entschlüsselungsschlüssel (17) mit Auftreten der Unterbrechung (F1) des Zwischenspeichern (S5) oder unmittelbar nach Aufheben der Unterbrechung (F1) des Zwischenspeicherns (S5) zu löschen (F3).

24. Datenträger (1) nach Anspruch 20 oder 21, **dadurch gekennzeichnet, dass** der Entschlüsselungsschlüssel (17) in einem flüchtigen Speicher (5) des Datenträgers (1) vorliegt und bei der Unterbrechung (F1) des Zwischenspeicherns als direkte Folge einer Unterbrechung der Stromversorgung gelöscht wird.

25. Datenträger (1) nach einem der Ansprüche 20 bis 24, **dadurch gekennzeichnet, dass** die Verarbeitungssteuerung (10) eingerichtet ist, bei einer Unterbrechung (F5) der Verarbeitung der entschlüsselten Daten (15) die Verarbeitung nach Aufheben der Unterbrechung (F5) fortzusetzen (F6) und den Entschlüsselungsschlüssel (17) erst nach vollständigem Beenden der Verarbeitung zu löschen (F7).

26. Datenträger (1) nach einem der Ansprüche 20 bis 25, **dadurch gekennzeichnet, dass** die Verarbeitungssteuerung (10) eingerichtet ist, als Verarbeitung ein Kopieren (S7) der entschlüsselten Daten (15) in einen Zielspeicherbereich (14) zu bewirken.

27. Datenträger (1) nach Anspruch 26, **dadurch gekennzeichnet, dass** in dem nichtflüchtigen Speicher (4) ein Speicherbereich (6) eines Dateisystems (12) ausgebildet ist und der Zielspeicherbereich (14) innerhalb dieses Speicherbereichs (6) ausgebildet ist.

28. Datenträger (1) nach Anspruch 27, **dadurch gekennzeichnet, dass** der Zwischenspeicherbereich (18) innerhalb des Speicherbereichs (6) eines Dateisystems (12) ausgebildet ist und dem Zielspeicherbereich (14) als ein lokaler Speicherbereich zugeordnet ist.

29. Datenträger (1) nach Anspruch 27, **dadurch gekennzeichnet, dass** der Zwischenspeicherbereich (18) im nichtflüchtigen Speicher (4) außerhalb des Speicherbereichs (6) eines Dateisystems (12) als ein globaler Speicherbereich ausgebildet ist.

30. Dortenträger (1) nach einem der Ansprüche 20 bis 29, **dadurch gekennzeichnet, dass** der Zwischenspeicherbereich (18) als temporärer Speicherbereich ausgebildet ist, auf dessen Daten nur die Verarbeitungssteuerung (10) zugreifen kann.

31. Datenträger (1) nach einem der Ansprüche 20 bis 30, **dadurch gekennzeichnet, dass** der Datenträger (1) desweiteren einen Schlüsselspeicherbereich (16) zum Speichern (S3) mindesten eines kryptographischen Schlüssels (17) umfasst, und die Kryptographiefunktion (10) eingerichtet ist, beim Zwischenspeichern (S5) die Daten (22) mit einem auf dem Datenträger (1) gespeicherten Schlüssel (17) zu verschlüsseln (S4) und die verschlüsselten Daten (19) mit dem kryptographischen Schlüssel (17) oder einem davon verschiedenen Entschlüsselungsschlüssel zum Verarbeiten zu entschlüsseln (S6).

32. Datenträger (1) nach einem der Ansprüche 20 bis 31, **dadurch gekennzeichnet, dass** die Kryptographiefunktion (11) eingerichtet ist, den Entschlüsselungsschlüssel (17) unmittelbar vor dem Zwischenspeichern (S5) der Daten individuell zu erzeugen (S2) und in einem Schlüsselspeicherbereich (18) abzulegen.

33. Datenträger (1) nach Anspruch 32, **dadurch gekennzeichnet, dass** der Schlüsselspeicherbereich (16) im Zwischenspeicherbereich (18) ausgebildet ist.

34. Datenträger (1) nach Anspruch 32, **dadurch gekennzeichnet, dass** der Schlüsselspeicherbereich (16) außerhalb des Zwischenspeicherbereichs (18) im nichtflüchtigen Speicher (4) ausgebildet ist.

35. Datenträger (1) nach einem der Ansprüche 20 bis 34, **dadurch gekennzeichnet, dass** der Datenträger (1) eine Chipkarte mit einem Prozessor (2) ist.

36. Datenträger (1) nach Anspruch 35, **dadurch gekennzeichnet, dass** die Kryptographiefunktion (11) als Betriebsystem-Modul oder als Hardwaremodul der Chipkarte (1) ausgebildet ist.

## Claims

1. A method for the secure processing of data (22) in a portable data carrier (1), wherein the following steps are carried out in the portable data carrier:
a) requesting data (22) to be processed;
b) encrypting (S4) the data (22) - provided by an external device - to be processed;
c) temporarily storing (S5) the encrypted data (19) in a non-volatile temporary memory area (18) of the data carrier (1);
d) decrypting (S6) the temporarily stored, encrypted data (19) with the help of a decryption key (17) stored in the data carrier; and
e) processing (S7) the decrypted data (22) to be processed,
wherein in case of an interruption (F1) during the temporary storing not the already temporarily stored data are deleted (F2) but the decryption key (17).

2. The method according to claim 1, **characterized in that** the decryption (S6) of the encrypted data (19) is effected immediately subsequent to the temporary storing (S5) of the encrypted data (19).

3. The method according to claim 1 or 2, **characterized in that** the decryption key (17) is deleted (S8) after the proper completion of the processing.

4. The method according to any of claims 1 to 3, **characterized in that** the data carrier successively executes the steps a to e in an uninterrupted sequence.

5. The method according to any of claims 1 to 4, **characterized in that** in case of the interruption (F1) of the temporary storing (S5) the decryption key (17) is deleted (F2) by an active delete operation.

6. The method according to claim 5, **characterized in that** the deletion (F2) is effected with the occurrence of the interruption (F1) of the temporary storing (S5) or immediately after the removal of the interruption (F1) of the temporary storing (S5).

7. The method according to any of claims 1 to 4, **characterized in that** the decryption key (17) is present in a volatile memory (5) and in case of the interruption (F1) of the temporary storing (S5) is deleted as a direct consequence of an interruption (F1) of the power supply.

8. The method according to any of claims 1 to 7, **characterized in that** in case of an interruption (F5) of the processing, the processing is continued (F6) after the removal of the interruption (F5) of the processing and the decryption key (17) is deleted only after the processing of the data (15) has been completed.

9. The method according to any of claims 1 to 8, **characterized in that** the processing comprises a copying (S7) of the decrypted data (15) into a target memory area (14).

10. The method according to claim 9, **characterized in that** the target memory area (14) is located within a memory area (6) of a data system (12) in a non-volatile memory (4) of the data carrier (1).

11. The method claim 10, **characterized in that** the temporary memory area (18) is formed locally within the memory area (6) of a data system (12) as a memory area associated with the target memory area (14).

12. The method according to claim 10, **characterized in that** the temporary memory area (18) is formed globally outside the memory area (6) of a data system (12) as a reserved memory area.

13. The method according to any of claims 1 to 12, **characterized in that** the temporary memory area (18) is formed as a temporary memory area whose data only the processing control (10) can access.

14. The method according to any of claims 1 to 13, **characterized in that** upon the temporary storing (S5), the data (22) are encrypted (S4) with a cryptographic key (17) stored on the data carrier (1) and upon the processing, the encrypted data (19) are decrypted (S6) with the cryptographic key or a decryption key differing therefrom.

15. The method according to any of claims 1 to 14, **characterized in that** the key (17) is individually created (S2) before the temporary storing (S5) of the data (22).

16. The method according to any of claims 1 to 15, **characterized in that** the decryption key (17) is stored (S3) in a key memory area (16) of the temporary memory area (18).

17. The method according to any of claims 1 to 15, **characterized in that** the decryption key (17) is stored (S3) in a key memory area (16) outside the temporary memory area (18).

18. The method according to any of claims 1 to 17, **characterized in that** the portable data carrier (1) is a chip card having a processor (2).

19. The method according to any of claims 1 to 18, **characterized in that** the encrypting and decrypting (S4, S6) is carried out with the help of a software module executable by a processor (2) of the data carrier (1) or of a hardware module of the data carrier (1).

20. A portable data carrier (1), comprising a processor (2), a non-volatile memory (4) as well as a processing control (10) and a cryptographic function (11), which both are executable by the processor (2), wherein
- the processing control (10) is arranged to request data (22) to be processed, to effect a temporary storing (S5) of the data (22) to be processed in a temporary memory area (18) of the data carrier (1) in encrypted form (19) and to effect a processing of the temporarily stored, encrypted data (19) as decrypted data (15),
wherein the processing control (10) is arranged such that in case of an interruption (F1) of the temporary storing not the already temporarily stored data are deleted (F2) but the decryption key (17); and
- the cryptographic function (11) is arranged to encrypt the data (22) to be temporarily stored in the temporary memory area (18) and provided by an external device, and to decrypt the encrypted data (19) to be processed with a decryption key (17) stored in the data carrier.

21. The data carrier (1) according to claim 20, **characterized in that** the processing control (10) is arranged to effect the decryption (S6) of the encrypted data (19) immediately subsequent to the temporary storing (S5) of the encrypted data (19).

22. The data carrier (1) according to claim 20 or 21, **characterized in that** the processing control (10) is arranged to delete (F2) the decryption key (17) with the help of an active delete operation when the interruption (F1) of the temporary storing (S5) occurs.

23. The data carrier (1) according to claim 22, **characterized in that** the processing control (10) is arranged to delete (F3) the decryption key (17) with the occurrence of the interruption (F1) of the temporary storing (S5) or immediately after the removal of the interruption (F1) of the temporary storing (S5).

24. The data carrier (1) according to claim 20 or 21, **characterized in that** the decryption key (17) is present in a volatile memory (5) of the data carrier (1) and in case of the interruption (F1) of the temporary storing the decryption key is deleted as a direct consequence of an interruption of the power supply.

25. The data carrier (1) according to any of claims 20 to 24, **characterized in that**, in case of an interruption (F5) of the processing of the decrypted data (15), the processing control (10) is arranged to continue (F6) the processing after the removal of the interruption (F5) and to delete (F7) the decryption key (17) only after the processing has been entirely completed.

26. The data carrier (1) according to any of claims 20 to 25, **characterized in that** the processing control (10) is arranged to effect as a processing a copying (S7) of the decrypted data (15) into a target memory area (14).

27. The data carrier (1) according to claim 26, **characterized in that** in the non-volatile memory (4) there is formed a memory area (6) of a data system (12) and the target memory area (14) is formed within this memory area (6).

28. The data carrier (1) according to claim 27, **characterized in that** the temporary memory area (18) is formed within the memory area (6) of a data system (12) and is associated with the target memory area (14) as a local memory area.

29. The data carrier (1) according to claim 27, **characterized in that** the temporary memory area (18) is formed as a global memory area in the non-volatile memory (4) outside the memory area (6) of a data system (12).

30. The data carrier (1) according to any of claims 20 to 29, **characterized in that** the temporary memory area (18) is formed as a temporary memory area whose data only the processing control (10) can access.

31. The data carrier (1) according to any of claims 20 to 30, **characterized in that** the data carrier (1) additionally comprises a key memory area (16) for storing (S3) at least one cryptographic key (17), and upon the temporary storing (S5), the cryptographic function (10) is arranged to encrypt (S4) the data (22) with a key (17) stored on the data carrier (1) and to decrypt (S6) the encrypted data (19) with the cryptographic key (17) or a decryption key differing therefrom for processing.

32. The data carrier (1) according to any of claims 20 to 31, **characterized in that** the cryptographic function (11) is arranged to individually create (S2) the decryption key (17) immediately before the temporary storing (S5) of the data and to deposit it in a key memory area (18).

33. The data carrier (1) according to claim 32, **characterized in that** the key memory area (16) is formed in the temporary memory area (18).

34. The data carrier (1) according to claim 32, **characterized in that** the key memory area (16) is formed outside the temporary memory area (18) in the non-volatile memory (4).

35. The data carrier (1) according to any of claims 20 to 34, **characterized in that** the data carrier (1) is a chip card having a processor (2).

36. The data carrier (1) according to claim 35, **characterized in that** the cryptographic function (11) is formed as an operating-system module or as a hardware module of the chip card (1).

## Revendications

1. Procédé de traitement fiable de données (22) dans un support de données (1) portable, les étapes suivantes étant exécutées dans le support de données portable:
a) demande de données (22) à traiter;
b) codage (S4) des données (22) à traiter - mises à disposition par un appareil externe;
c) mémorisation intermédiaire (S5) des données (19) codées, dans une zone non volatile de mémoire intermédiaire (18) du support de données (1);
d) décodage (S6) des données (19) codées mémorisées intermédiairement, au moyen d'une clé de décodage (17) mémorisée dans le support de données; et
e) traitement (S7) des données (22) décodées à traiter, cependant que, dans le cas d'une interruption (F1) durant la mémorisation intermédiaire, ce ne sont pas les données déjà mémorisées intermédiairement, mais la clé de décodage (17) qui est effacée (F2).

2. Procédé selon la revendication 1, **caractérisé en ce que** le décodage (S6) des données (19) codées a lieu immédiatement après la mémorisation intermédiaire (S5) des données (19) codées.

3. Procédé selon la revendication 1 ou 2, **caractérisé en ce que** la clé de décodage (17) est effacée (S8) après l'achèvement adéquat du traitement.

4. Procédé selon une des revendications de 1 à 3, **caractérisé en ce que** le support de données exécute les unes après les autres, en un déroulement ininterrompu, les étapes de a à e.

5. Procédé selon une des revendications de 1 à 4, **caractérisé en ce que** la clé de décodage (17) est, dans le cas de l'interruption (F1) de la mémorisation intermédiaire (S5), effacée (F2) par un processus actif d'effacement.

6. Procédé selon la revendication 5, **caractérisé en ce que** l'effacement (F2) a lieu à l'instant de la survenance de l'interruption (F1) de la mémorisation intermédiaire (S5) ou immédiatement après la suppression de l'interruption (F1) de la mémorisation intermédiaire (S5).

7. Procédé selon une des revendications de 1 à 4, **caractérisé en ce que** la clé de décodage (17) se trouve dans une mémoire volatile (5) et est effacée dans le cas de l'interruption (F1) de la mémorisation intermédiaire (S5), en tant que conséquence directe d'une interruption (F1) de l'alimentation électrique.

8. Procédé selon une des revendications de 1 à 7, **caractérisé en ce que**, dans le cas d'une interruption (F5) du traitement, le traitement est poursuivi (F6) après suppression de l'interruption (F5) du traitement et la clé de décodage (17) n'est effacée qu'après achèvement du traitement des données (15).

9. Procédé selon une des revendications de 1 à 8, **caractérisé en ce que** le traitement comprend une opération de copie (S7) des données (15) décodées dans une zone de mémoire de destination (14).

10. Procédé selon la revendication 9, **caractérisé en ce que** la zone de mémoire de destination (14) se trouve à l'intérieur d'une zone de mémoire (6) d'un système de fichiers (12) dans une mémoire (4) non volatile du support de données (1).

11. Procédé selon la revendication 10, **caractérisé en ce que** la zone de mémoire intermédiaire (18) est, à l'intérieur de la zone de mémoire (6) d'un système de fichiers (12), réalisée localement en tant que zone de mémoire affectée à la zone de mémoire de destination (14).

12. Procédé selon la revendication 10, **caractérisé en ce que** la zone de mémoire intermédiaire (18) est, à l'extérieur de la zone de mémoire (6) d'un système de fichiers (12), réalisée globalement en tant que zone de mémoire réservée.

13. Procédé selon une des revendications de 1 à 12, **caractérisé en ce que** la zone de mémoire intermédiaire (18) est réalisée en tant que zone de mémoire temporaire aux données de laquelle seule la commande de traitement (10) peut avoir accès.

14. Procédé selon une des revendications de 1 à 13, **caractérisé en ce que**, lors de la mémorisation intermédiaire (S5), les données (22) sont codées(S4) avec une clé cryptographique (17) mémorisée sur le support de données (1), et **en ce que**, lors du traitement, les données (19) codées sont décodées (S6) avec la clé cryptographique ou avec une clé de décodage en étant différente.

15. Procédé selon une des revendications de 1 à 14, **caractérisé en ce que** la clé (17) est générée (S2) individuellement avant la mémorisation intermédiaire (S5) des données (22).

16. Procédé selon une des revendications de 1 à 15, **caractérisé en ce que** la clé de décodage (17) est mémorisée (S3) dans une zone de mémoire de clé (16) de la zone de mémoire intermédiaire (18).

17. Procédé selon une des revendications de 1 à 15, **caractérisé en ce que** la clé de décodage (17) est mémorisée (S3) dans une zone de mémoire de clé (16) située à l'extérieur de la zone de mémoire intermédiaire (18).

18. Procédé selon une des revendications de 1 à 17, **caractérisé en ce que** le support de données (1) portable est une carte à puce dotée d'un processeur (2).

19. Procédé selon une des revendications de 1 à 18, **caractérisé en ce que** le codage et le décodage (S4, S6) est effectué au moyen d'un module logiciel exécutable par un processeur (2) du support de données (1) ou au moyen d'un module matériel du support de données (1).

20. Support de données (1) portable, comprenant un processeur (2), une mémoire non volatile (4) ainsi qu'une commande de traitement (10) et une fonction de cryptographie (11) étant toutes les deux exécutables par le processeur (2), cependant que
- la commande de traitement (10) est configurée pour demander des données (22) à traiter, pour occasionner une mémorisation intermédiaire (S5) sous forme codée (19), dans une zone de mémoire intermédiaire (18) du support de données (1), des données (22) à traiter, et pour occasionner un traitement, sous forme de données décodées (15), des données codées (19) mémorisées intermédiairement,
cependant que la commande de traitement (10) est configurée de telle façon que, dans le cas d'une interruption (F1) de la mémorisation intermédiaire, ce ne sont pas les données déjà mémorisées intermédiairement, mais la clé de décodage (17) qui est effacée (F2); et
- la fonction de cryptographie (11) est configurée pour coder les données (22) mises à disposition par un appareil externe et devant être mémorisées intermédiairement dans la zone de mémoire intermédiaire (18), et pour décoder, avec une clé de décodage (17) mémorisée dans le support de données, les données (19) codées à traiter.

21. Support de données (1) selon la revendication 20, **caractérisé en ce que** la commande de traitement (10) est configurée pour occasionner immédiatement après la mémorisation intermédiaire (S5) des données (19) codées le décodage (S6) des données codées (19).

22. Support de données (1) selon la revendication 20 ou 21, **caractérisé en ce que** la commande de traitement (10) est configurée pour, dans le cas de l'interruption (F1) de la mémorisation intermédiaire (S5), effacer (F2) la clé de décodage (17) par un processus actif d'effacement.

23. Support de données (1) selon la revendication 22, **caractérisé en ce que** la commande de traitement (10) est configurée pour effacer (F3) la clé de décodage (17) à l'instant de la survenance de l'interruption (F1) de la mémorisation intermédiaire (S5) ou immédiatement après la suppression de l'interruption (F1) de la mémorisation intermédiaire (S5).

24. Support de données (1) selon la revendication 20 ou 21, **caractérisé en ce que** la clé de décodage (17) se trouve dans une mémoire volatile (5) du support de données (1) et est effacée dans le cas de l'interruption (F1) de la mémorisation intermédiaire, en tant que conséquence directe d'une interruption de l'alimentation électrique.

25. Support de données (1) selon une des revendications de 20 à 24, **caractérisé en ce que** la commande de traitement (10) est configurée pour, dans le cas d'une interruption (F5) du traitement des données décodées (15), poursuivre (F6) le traitement après suppression de l'interruption (F5) et n'effacer (F7) la clé de décodage (17) qu'après achèvement complet du traitement.

26. Support de données (1) selon une des revendications de 20 à 25, **caractérisé en ce que** la commande de traitement (10) est configurée pour, en tant que traitement, occasionner une opération de copie (S7) des données (15) décodées dans une zone de mémoire de destination (14).

27. Support de données (1) selon la revendication 26, **caractérisé en ce que**, dans la mémoire (4) non volatile, une zone de mémoire (6) d'un système de fichiers (12) est réalisée, et **en ce que** la zone de mémoire de destination (14) est réalisée à l'intérieur de cette zone de mémoire (6).

28. Support de données (1) selon la revendication 27, **caractérisé en ce que** la zone de mémoire intermédiaire (18) est réalisée à l'intérieur de la zone de mémoire (6) d'un système de fichiers (12) et est affectée à la zone de mémoire de destination (14) en tant qu'une zone locale de mémoire.

29. Support de données (1) selon la revendication 27, **caractérisé en ce que** la zone de mémoire intermédiaire (18) est réalisée dans la mémoire (4) non volatile à l'extérieur de la zone de mémoire (6) d'un système de fichiers (12), en tant qu'une zone de mémoire globale.

30. Support de données (1) selon une des revendications de 20 à 29, **caractérisé en ce que** la zone de mémoire intermédiaire (18) est réalisée en tant que zone de mémoire temporaire aux données de laquelle seule la commande de traitement (10) peut avoir accès.

31. Support de données (1) selon une des revendications de 20 à 30, **caractérisé en ce que** le support de données (1) comprend en outre une zone de mémoire de clé (16) destinée à la mémorisation (S3) d'au moins une clé cryptographique (17), et **en ce que** la fonction de cryptographie (10) est configurée pour, lors de la mémorisation intermédiaire (S5), coder (S4) les données (22) avec une clé (17) mémorisée sur le support de données (1) et décoder (S6), pour le traitement, avec la clé cryptographique (17) ou avec une clé de décodage en étant différente, les données codées (19).

32. Support de données (1) selon une des revendications de 20 à 31, **caractérisé en ce que** la fonction de cryptographie (11) est configurée pour générer (S2) individuellement la clé de décodage (17) immédiatement avant la mémorisation intermédiaire (S5) des données, et pour la stocker dans une zone de mémoire de clé (18).

33. Support de données (1) selon la revendication 32, **caractérisé en ce que** la zone de mémoire de clé (16) est réalisée dans la zone de mémoire intermédiaire (18).

34. Support de données (1) selon la revendication 32, **caractérisé en ce que** la zone de mémoire de clé (16) est réalisée à l'extérieur de la zone de mémoire intermédiaire (18) dans la mémoire non volatile (4).

35. Support de données (1) selon une des revendications de 20 à 34, **caractérisé en ce que** le support de données (1) est une carte à puce dotée d'un processeur (2).

36. Support de données (1) selon la revendication 35, **caractérisé en ce que** la fonction de cryptographie (11) est réalisée sous forme de module de système d'exploitation ou sous forme de module matériel de la carte à puce (1).
